# EUROPÄISCHE PATENTANMELDUNG

(11) **EP 2 991 196 A2**
(43) Veröffentlichungstag der Anmeldung: **02.03.2016**
(21) Anmeldenummer: 15176678.9
(22) Anmeldetag: 14.07.2015
(51) Int. Cl.: H02K 1/27, H02K 1/30

(54) **PERMANENTMAGNET FÜR EINEN ROTOR EINER ELEKTRISCHEN MASCHINE**

(30) Priorität: 01.09.2014 EP 14183004; 01.04.2015 EP 15162240
(71) Anmelder: Siemens Aktiengesellschaft, 80333 München (DE)
(72) Erfinder: Bott, Erich, 97618 Hollstadt (DE); Seufert, Reiner, 97616 Salz (DE); Vollmer, Rolf, 36129 Gersfeld (DE)

(57) **Zusammenfassung**

Die Erfindung betrifft einen Permanentmagneten (10, 110, 210, 310, 410, 1010) umfassend einen Nord- (21, 121) und einen Südpol (22, 122) als magnetische Pole und Endflächen (12, 112, 212) an einem ersten Ende (11, 1011, 211, 311, 411) und einem zweiten Ende (31, 1031, 231, 331, 431) des Permanentmagneten (10, 110, 210, 310, 410, 1010), wobei in einem Querschnitt (13) des Permanentmagneten (10, 110, 210, 310, 410, 1010) eine Magnetisierung (14, 114) von dem Südpol (22, 122) zu dem Nordpol (21, 121) verläuft, wobei der Querschnitt (13) eine Hüllkurve (15, 1015, 215) mit einem ersten konvexen Abschnitt (16, 116, 1016, 216) aufweist, wobei die magnetischen Pole bogenförmig entlang des ersten konvexen Abschnitts (16, 116, 1016, 216) verlaufen, wobei die Hüllkurve (15, 1015, 215) bikonvex linsenförmig den ersten konvexen Abschnitt (16, 116, 1016, 216) und einen zweiten konvexen Abschnitt (17, 117, 217, 317) aufweist, wobei der Permanentmagnet (10, 110, 210, 310, 410, 1010) entlang des zweiten konvexen Abschnitts (17, 117, 217, 317) bogenförmig verläuft, wobei mindestens eine der Endflächen (12, 112, 212) innerhalb der Hüllkurve (15, 1015, 215) eine Fläche (18, 118, 218, 318, 418, 1038, 238, 338, 438) für eine Verbindung (670, 671) einer Verbindungsvorrichtung (672, 772, 872, 972) mit dem Permanentmagneten (10, 110, 210, 310, 410, 1010) aufweist, einen Rotor (600, 700, 800, 900) für eine elektrische Maschine (61, 62, 63, 64) umfassend den Permanentmagneten (10, 110, 210, 310, 410, 1010) und eine elektrische Maschine (61, 62, 63, 64), umfassend den Rotor (600, 700, 800, 900), sowie eine Verwendung des Permanentmagneten (10, 110, 1010, 210, 310, 410) für einen Rotor (600, 700, 800, 900) einer elektrischen Maschine (61, 62, 63, 64).

## Beschreibung

Die Erfindung betrifft einen Permanentmagneten gemäß dem Oberbegriff des Anspruchs 1. Die Erfindung betrifft auch einen Rotor für eine elektrische Maschine, umfassend den Permanentmagneten, sowie die elektrische Maschine und eine Verwendung des Permanentmagneten für den Rotor der elektrischen Maschine.

Ein derartiger Permanentmagnet ist aus der CH 549 307 A bekannt. Die dort beschriebenen Permanentmagnete können die Form eines Hufeisens haben, dessen Joch im Innersten liegt und dessen Schenkel nach außen gerichtet sind. Es ist dabei nicht wesentlich, dass der Permanentmagnet die äußere Form eines Hufeisenmagnets hat, da es gemäß der genannten Veröffentlichung möglich ist, den Magneten in der Form eines sechseckigen oder segmentartigen Blocks auszubilden. Neben der Nachbildung der U- oder V-Form des Permanentmagneten durch einzelne rechteckige Permanentmagnete werden dabei auch aus einem Stück bestehende Magnete in U- oder V-Form beschrieben. Die Schenkel der Magnete erstrecken sich radial nach auswärts, so dass sich die zwei magnetischen Pole des Permanentmagneten an in Kreisumfangsrichtung auseinander liegenden Orten auf der äußersten radialen Fläche des Magneten befinden. Die Magnete der Veröffentlichung setzen sich aus einem Material mit hoher Koerzitivkraft zusammen und können aus einer keramischen oder metallischen Masse oder einer Mischung von Eisenpulver bestehen, welches mit Gummi oder Harz gebunden ist. Die Permanentmagnete werden normalerweise vor der Montage magnetisiert, aber es ist auch möglich, eine Statorwicklung zum Magnetisieren oder zum Einstellen seines Magnetisierungspegels zu verwenden. In der genannten Veröffentlichung werden die Permanentmagnete bei einem Permanentmagnetrotor für Wechselstrommaschinen, insbesondere Synchronmotoren oder -generatoren verwendet. Der Rotor enthält vorzugsweise einen an sich bekannten Kurzschlusskäfig, um das Anzugsmoment ähnlich der Kurzschlussläufermotoren vorzusehen. Wenn der Kurzschlussring des Kurzschlusskäfigs durch Gießen hergestellt wird, werden die Permanentmagnete durch Aluminiumgusskörper gleichzeitig mit den Stäben am Platz gehalten. Ein Klebstoff kann zum Festhalten der Magnete während des Gießvorgangs verwendet werden. Wird der Kurzschlussanker aus Kupferstäben hergestellt, so werden die Magnete durch Kupferstäbe oder die Kombination von Kupferstäben mit einem Klebstoff, z.B. Epoxyharz, welches zur Befestigung der Magnete an der Spule angewendet wird, gehalten.

Der Erfindung liegt die Aufgabe zugrunde, einen technischen Beitrag zu einem Permanentmagneten zu leisten, bei dem kostengünstig in einer hohen Qualität eine Verbindungsvorrichtung eines Rotors oder einer elektrischen Maschine mit dem Permanentmagneten verbunden werden kann und für einen kostengünstigen Rotor oder elektrischen Maschine hoher Qualität verwendet werden kann.

Die Aufgabe wird durch einen Permanentmagneten mit den Merkmalen des Anspruchs 1 gelöst.

Ein erfindungsgemäßer Permanentmagnet umfasst
- einen Nord- und einen Südpol als magnetische Pole und
- Endflächen an einem ersten Ende und einem zweiten Ende des Permanentmagneten,
- wobei in einem Querschnitt des Permanentmagneten eine Magnetisierung von dem Südpol zu dem Nordpol verläuft,
- wobei der Querschnitt eine Hüllkurve mit einem ersten konvexen Abschnitt aufweist,
- wobei die magnetischen Pole bogenförmig entlang dem ersten konvexen Abschnitt verlaufen,
- wobei die Hüllkurve bikonvex linsenförmig den ersten konvexen Abschnitt und einen zweiten konvexen Abschnitt aufweist,
- wobei der Permanentmagnet entlang des zweiten konvexen Abschnitts bogenförmig verläuft,
- wobei mindestens eine der Endflächen innerhalb der Hüllkurve eine Fläche für eine Verbindung einer Verbindungsvorrichtung mit dem Permanentmagneten aufweist.

Die Aufgabe wird auch durch einen Rotor für eine elektrische Maschine mit den Merkmalen des Anspruchs 11 gelöst.

Ein erfindungsgemäßer Rotor für eine elektrische Maschine umfasst einen erfindungsgemäßen Permanentmagneten, wobei der Permanentmagnet sich von seinem ersten Ende zu seinem zweiten Ende parallel zu einer Drehachse erstreckt, wobei der erste konvexe Abschnitt des Permanentmagneten entlang einer Hüllkurve des Rotors angeordnet ist, wobei der Rotor die Verbindungsvorrichtung und die Verbindung zwischen der Verbindungsvorrichtung und der Fläche des Permanentmagneten aufweist.

Die Aufgabe wird auch durch eine elektrische Maschine mit den Merkmalen des Anspruchs 14 gelöst.

Die erfindungsgemäße elektrische Maschine umfasst einen erfindungsgemäßen Rotor und einen Stator, der in einem Betrieb der elektrischen Maschine über einen Luftspalt magnetisch zusammenwirkt, wobei der Rotor um die Drehachse drehbar gelagert ist.

Die Aufgabe wird auch durch eine Verwendung eines Permanentmagneten nach Anspruch 15 gelöst.

Bei einer erfindungsgemäßen Verwendung eines erfindungsgemäßen Permanentmagneten. Bei einer erfindungsgemäßen Verwendung eines erfindungsgemäßen Permanentmagneten für einen Rotor einer elektrischen Maschine wird der Permanentmagnet bei dem Rotor verwendet, der die Verbindungsvorrichtung aufweist, wobei der Rotor die Verbindung zwischen der Verbindungsvorrichtung und der Fläche des Permanentmagneten aufweist, wobei mindestens eine der Endflächen des Permanentmagneten die Fläche aufweist, und der Querschnitt des Permanentmagneten die bikonvexe linsenförmige Hüllkurve aufweist.

Die Aufgabe wird erfindungsgemäß vorteilhaft gelöst, indem durch den Querschnitt des Permanentmagneten mit seiner bikonvexen linsenförmigen Hüllkurve die Fläche an mindestens einer Endfläche des Permanentmagneten vorteilhaft kostengünstig in einer hohen Qualität für eine Verbindung mit dem Permanentmagneten genutzt werden kann. Vorteilhaft platzsparend kann durch den erfindungsgemäßen Querschnitt und die vom Süd- zum Nordpol verlaufende Magnetisierung eine laterale Magnetisierung mit vorteilhaft geringer Menge an Magnetmaterial vorteilhaft erreicht werden. Durch die laterale Magnetisierung stellt der Permanentmagnet vorteilhaft platzsparend den Nord- und den Südpol entlang des ersten konvexen Abschnitts auf einer Seite des Permanentmagneten zur Verfügung. Vorteilhaft platzsparend können durch die zueinander bikonvexe linsenförmige Anordnung des ersten konvexen Abschnitts und des zweiten konvexen Abschnitts die Endflächen vorteilhaft große Flächen zur Verbindung einer Verbindungsvorrichtung, insbesondere einer Verbindungsvorrichtung der elektrischen Maschine, mit dem Permanentmagneten zur Verfügung stellen.

Die mindestens eine der Endflächen kann innerhalb der Hüllkurve des Querschnitts verlaufen. So kann die Endfläche vorteilhaft kostengünstig in einer hohen Qualität hergestellt und in einer elektrischen Maschine verwendet werden, da die Endfläche nicht über die Hüllkurve hinausragt.

Der Permanentmagnet erstreckt sich von seinem ersten Ende in einer ersten Richtung bis zu seinem zweiten Ende. Der Querschnitt des Permanentmagneten erstreckt sich in einer Ebene, die durch eine zweite Richtung und eine dritte Richtung aufgespannt sind. Die zweite Richtung und die dritte Richtung verlaufen senkrecht zu der ersten Richtung.

Ein erfindungsgemäßer Rotor weist den weiteren Vorteil auf, dass der Rotor vorteilhaft kostengünstig in hoher Qualität mit vorteilhaft kleinen Abmessungen zur Verfügung gestellt werden kann. Die Permanentmagnete können vorteilhaft eine geringe Höhe aufweisen, wobei die Höhe als größter Abstand zwischen dem ersten und dem zweiten konvexen Abstand gemessen ist.

Der Rotor kann mindestens zwei erfindungsgemäße Permanentmagnete aufweisen, die sich von ihrem ersten zu ihrem zweiten Ende parallel zu einer Drehachse erstrecken, wobei die ersten konvexen Abschnitte der Permanentmagnete an der Hüllkurve des Rotors auf einer zu der Drehachse konzentrisch verlaufenden Kreislinie angeordnet sind, wobei der Rotor mindestens die Verbindungsvorrichtung aufweist und die Verbindungen zwischen der mindestens einen Verbindungsvorrichtung und der Fläche der Permanentmagneten aufweist. So kann eine gleichmäßigere Drehbewegung des Rotors um die Drehachse vorteilhaft erreicht werden.

Ein Nordpol eines Permanentmagneten kann entlang der Hüllkurve des Rotors neben dem Nordpol des an der Hüllkurve des Rotors nächstgelegenen Permanentmagneten vorhanden sein. So kann vorteilhaft kostengünstig in einer hohen Qualität ein magnetischer Pol eines erfindungsgemäßen Rotors die beiden Nordpole aufweisen. Vorteilhaft kann hierbei der Abstand zwischen dem Permanentmagneten und seinem nächstgelegenen Permanentmagneten nicht dem Abstand des Nordpols und des Südpols von ein und demselben Permanentmagneten entsprechen.

Eine erfindungsgemäße elektrische Maschine weist den weiteren Vorteil auf, dass die elektrische Maschine vorteilhaft kostengünstig in einer hohen Qualität mit vorteilhaft kleiner Abmessung zur Verfügung gestellt werden kann. Es kann vorteilhaft platzsparend ein erfindungsgemäßer Permanentmagnet in der elektrischen Maschine an einem erfindungsgemäßen Rotor durch die Verbindung befestigt werden und dabei eine vorteilhaft hohe Luftspalt-Induktion im Luftspalt der erfindungsgemäßen elektrischen Maschine vorteilhaft erreicht werden.

Beispielsweise könnte dadurch auf eine Bandagierung des gesamten Rotors vorteilhaft verzichtet werden. In diesem Fall sind die magnetischen Pole der Permanentmagnete im Luftspalt nicht vollständig, insbesondere überhaupt nicht, mit einer Verbindungsvorrichtung, z.B. einer Bandage, bedeckt. So kann die Luftspalt-Induktion weiterhin vorteilhaft erhöht werden oder die Abmessung der elektrischen Maschine vorteilhaft verkleinert werden.

Ein erfindungsgemäßer Rotor kann an einer Welle befestigt in einer erfindungsgemäßen elektrischen Maschine mithilfe einer ersten Lagervorrichtung und einer zweiten Lagervorrichtung um die Drehachse drehbar gelagert werden.

In einem Betrieb einer erfindungsgemäßen elektrischen Maschine mit einem erfindungsgemäßen Rotor als Generator wird der Rotor durch mechanische Energie in eine Drehung um die Drehachse versetzt. Durch das magnetische Zusammenwirken zwischen magnetischen Polen des Rotors und des Stator über einen Luftspalt kann die mechanische Energie in elektrische Energie umgewandelt werden. Die elektrische Energie kann an mindestens einer Wicklung, die am Stator befestigt ist und zu einer Bildung der magnetischen Pole des Stators beiträgt, durch Anschließen eines elektrischen Verbrauchers entnommen werden.

Bei einem Betrieb einer erfindungsgemäßen elektrischen Maschine mit einem erfindungsgemäßen Rotor als Motor wird über die mindestens eine Wicklung elektrische Energie zugeführt und durch das magnetische Zusammenwirken zwischen den magnetischen Polen des Stators und eines erfindungsgemäßen Rotors über den Luftspalt elektrische Energie in mechanische Energie umgewandelt. Dabei wird ein Drehmoment erzeugt, dass den Rotor in Drehung um die Drehachse versetzen kann und es kann an der Welle mechanische Energie an einen mechanischen Verbraucher in Form einer Drehbewegung abgegeben werden.

Eine erfindungsgemäße Verwendung des Permanentmagneten weist den weiteren Vorteil auf, dass der Permanentmagnet kostengünstig in einer hohen Qualität mit vorteilhaft kleinen Abmessungen angeliefert werden kann. So wird Transportvolumen für den Permanentmagneten und für die dafür notwendigen Sicherheitsvorkehrungen vorteilhaft eingespart.

Vorteilhafte Ausgestaltungen der Erfindung sind in den abhängigen Ansprüchen angegeben. Es wird hierbei ein technischer Beitrag zur vorteilhaften Ausgestaltung eines erfindungsgemäßen Permanentmagneten geleistet, bei dem kostengünstig in einer hohen Qualität eine Verbindungsvorrichtung eines Rotors oder einer elektrischen Maschine mit dem Permanentmagneten verbunden werden kann und für einen kostengünstigen Rotor oder elektrischen Maschine hoher Qualität verwendet werden kann.

So ist eine Ausgestaltung eines erfindungsgemäßen Permanentmagneten vorteilhaft, bei der die Endfläche des ersten Endes die Fläche zumindest für die Verbindung der Verbindungsvorrichtung mit dem Permanentmagneten durch Stoffschluss aufweist. So kann der Permanentmagnet vorteilhaft über eine Ebene stoffschlüssig mit der Verbindungsvorrichtung verbunden werden. Eine Ebene kann mit vorteilhaft einfachen Werkzeugen mit vorteilhaft einfachen Bewegungsabläufen herstellgestellt werden.

Es kann die Fläche des Permanentmagneten unbearbeitet sein. So kann unter Verzicht auf eine Beschichtung kostengünstig eine qualitativ hochwertige Verbindung vorteilhaft erreicht werden, die die Übertragung von großen Kräften von einem erfindungsgemäßen Permanentmagneten auf eine Verbindungsvorrichtung vorteilhaft ermöglicht, da eine stoffschlüssige Schicht zwischen der Verbindungsvorrichtung und dem Permanentmagneten an der Fläche aufgrund ihrer Rauigkeit besser haftet. Es kann z.B. hierfür nach dem Sintern des Permanentmagneten auf eine Nachbearbeitung der Fläche für die Verbindung vorteilhaft verzichtet werden.

Die Fläche des Permanentmagneten kann eine Beschichtung aufweisen. So kann kostengünstig eine qualitativ hochwertige Verbindung vorteilhaft erreicht werden, die eine Übertragung von großen Kräften durch Stoffschluss zwischen der Verbindungsvorrichtung und der Beschichtung und einem erfindungsgemäßen Permanentmagneten vorteilhaft erreicht. Hierbei kann die Fläche vor einem Aufbringen der Beschichtung auf dem Permanentmagneten unbearbeitet sein oder bearbeitet sein.

In einer weiteren vorteilhaften Ausgestaltung eines erfindungsgemäßen Permanentmagneten weist die Endfläche des ersten Endes eine Kontur auf, die die Fläche für die Verbindung der Verbindungsvorrichtung mit dem Permanentmagneten durch Formschluss aufweist. So kann an der Endfläche die Kontur vorteilhaft hergestellt werden, da diese durch die bikonvexe linsenförmige Hüllkurve und den bogenförmigen Verlauf der Magnetisierung eine vorteilhaft große Fläche aufweisen kann.

In einer weiteren vorteilhaften Ausgestaltung eines erfindungsgemäßen Permanentmagneten weist die Kontur eine Ausnehmung in der Endfläche des ersten Endes auf. Aufgrund der vorteilhaft großen Fläche kann trotz der Ausnehmung noch eine vorteilhafte Berandung der Ausnehmung erreicht werden und Materialausbrüche an den Permanentmagneten vorteilhaft vermieden werden.

Die Kontur kann eine Nut aufweisen. So können vorteilhaft parallel zum Querschnitt auf dem Permanentmagnet wirkende Kraftkomponenten vorteilhaft auf die Fläche verteilt entsprechend dem Verlauf der Nut vorteilhaft aufgenommen werden.

In einer weiteren vorteilhaften Ausgestaltung eines erfindungsgemäßen Permanentmagneten weist die Kontur einen gegenüber der Endfläche hervorstehenden Steg auf. Es kann so zum Verbinden mit der Verbindungsvorrichtung der Steg vorteilhaft einfach eingegossen werden.

In einer weiteren vorteilhaften Ausgestaltung eines erfindungsgemäßen Permanentmagneten weist die Kontur eine kreisrunde Berandung auf. Vorteilhaft kann durch die kreisförmige Berandung die Fläche groß ausgeführt werden.

In einer weiteren vorteilhaften Ausgestaltung eines erfindungsgemäßen Permanentmagneten weist die Kontur eine Berandung auf, die sich bogenförmig von einem ersten Punkt des zweiten konvexen Abschnitts zu einem zweiten Punkt des zweiten konvexen Abschnitts erstreckt. Es kann so vorteilhaft eine parallel zu dem Querschnitt auf dem Permanentmagneten relativ zu der Verbindungsvorrichtung wirkende Kraftkomponente durch die Berandung aufgenommen werden. Insbesondere ist dies bei einem erfindungsgemäßen Rotor vorteilhaft, bei dem Kräfte in radialer Richtung wirken.

Es kann die Verbindungsvorrichtung ein Verbindungsteil aufweisen, das einen umlaufenden Rand für eine formschlüssige Verbindung mit der Berandung der Kontur aufweist. Die Verbindung der Verbindungsvorrichtung mit dem Permanentmagneten durch Formschluss kann so diese formschlüssige Verbindung aufweisen. So können vorteilhaft, insbesondere bei einem erfindungsgemäßen Rotor, durch den umlaufenden Rand hohe Kräfte von der Berandung aufgenommen werden, da der umlaufende Rand keinen Anfang und keine Ende aufweist und so beim Einwirken der Kräfte auf dem Rand diese auf dem gesamten umlaufende Rand verteilt werden.

In einer weiteren vorteilhaften Ausgestaltung eines erfindungsgemäßen Permanentmagneten weist der Permanentmagnet zwischen dem Nord- und dem Südpol an dem ersten konvexen Abschnitt eine Ausnehmung auf. So kann vorteilhaft bei einer erfindungsgemäßen elektrischen Maschine die dem Luftspalt zugewandte Oberfläche des Rotors eine Ausnehmung zwischen dem Nord- und dem Südpol des Permanentmagneten aufweisen.

In einer weiteren vorteilhaften Ausgestaltung eines erfindungsgemäßen Permanentmagneten verläuft der Permanentmagnet zwischen dem Nord- und dem Südpol entlang dem ersten konvexen Abschnitt. So kann bei einer erfindungsgemäßen Maschine vorteilhaft die dem Luftspalt zugewandte Oberfläche des Rotors zwischen dem Nord- und dem Südpol des Permanentmagneten eine durchgehende Oberfläche aufweisen.

In einer weiteren vorteilhaften Ausgestaltung eines erfindungsgemäßen Permanentmagneten ist der Permanentmagnet ein gesinterter Permanentmagnet. Es kann vorteilhaft ein erfindungsgemäßer Permanentmagnet mit hoher Magnetkraft für eine erfindungsgemäße Verwendung verwendet werden, insbesondere kann er als Bestandteil eines erfindungsgemäßen Rotors oder einer erfindungsgemäßen elektrischen Maschine vorhanden sein. Es kann eine hohe Luftspaltinduktion platzsparend durch eine hohe Magnetkraft mit einer zuverlässigen Verbindung bzw. Verbindungsmöglichkeit des Permanentmagneten vorteilhaft erreicht werden.

In einer weiteren vorteilhaften Ausgestaltung eines erfindungsgemäßen Rotors weist der Rotor die Verbindung an einem ersten axialen Ende des Rotors auf und der Rotor weist eine zweite Verbindung der Verbindungsvorrichtung mit der Endfläche an dem zweiten Ende des Permanentmagneten auf. So können die Permanentmagnete durch eine Verbindung an ihren beiden Endflächen mit dem Rotor vorteilhaft verbunden und damit vorvorteilhaft befestigt, werden, insbesondere vorteilhaft innerhalb der Hüllkurve des Rotors.

In einer weiteren vorteilhaften Ausgestaltung eines erfindungsgemäßen Rotors weist der Rotor die zweite Verbindung in einem Rotorabschnitt zwischen dem ersten und einem zweiten axialen Ende des Rotors auf und der Rotor weist zwischen dem Rotorabschnitt und dem zweiten axialen Ende mindestens einen weiteren Permanentmagneten auf. Es können so vorteilhaft mehrere Permanentmagnete in axialer Richtung hintereinander an dem Rotor befestigt werden.

In einer weiteren vorteilhaften Ausgestaltung eines erfindungsgemäßen Rotors erstreckt sich die Verbindungsvorrichtung in einem Querschnitt des Rotors an den Permanentmagneten angrenzend konzentrisch zur Hüllkurve des Rotors ringförmig. Es kann so eine vorteilhaft gleichmäßige Verteilung von Fliehkräften in einem Betrieb der elektrischen Maschine auf die Verbindungsvorrichtung vorteilhaft erreicht werden und gleichzeitig vorteilhaft bei mehreren Permanentmagneten in axialer Richtung hintereinander geringe, im Idealfall keine, Unterbrechung der Oberfläche zwischen hintereinander angeordneten Permanentmagneten erreicht werden.

In einer weiteren vorteilhaften Ausgestaltung eines erfindungsgemäßen Rotors ist der Permanentmagnet in der Verbindungvorrichtung eingebettet. So können vorteilhaft die Anforderungen an die Maßhaltigkeit des Permanentmagneten in seinen Abmessungen vorteilhaft gering sein, da die Verbindungsvorrichtung die Lücken, die durch eine fehlende Maßhaltigkeit des Permanentmagneten entstehen, ausfüllt. So kann z.B. auf eine mechanische Nachbearbeitung eines Permanentmagneten nach dem Sintern vorteilhaft verzichtet werden.

Vorteilhafte Ausgestaltungen erfindungsgemäßer Permanentmagnete, erfindungsgemäßer Rotoren sowie erfindungsgemäßer elektrischer Maschinen und erfindungsgemäßer Verwendungen ergeben sich vorteilhaft durch Kombination einiger oder mehrerer beschriebener Merkmale. Die oben beschriebenen Eigenschaften, Merkmale und Vorteile dieser Erfindung sowie die Art und Weise, wie diese erreicht werden, werden klarer und deutlicher verständlich im Zusammenhang mit der nun folgenden Beschreibung der Ausführungsbeispiele, die anhand der Figuren näher erläutert werden.

Es zeigen:
- FIG 1: ein erstes Ausführungsbeispiel eines erfindungsgemäßen Permanentmagneten,
- FIG 2: eine Ansicht eines zweiten Ausführungsbeispiels eines erfindungsgemäßen Permanentmagneten, bei der man auf eine Endfläche sieht,
- FIG 3: einen Längsschnitt durch ein erstes Ausführungsbeispiel eines erfindungsgemäßen Rotors,
- FIG 4: einen Querschnitt des Rotors der FIG 3 entlang der Linie IV-IV,
- FIG 5: eine Ansicht eines dritten Ausführungsbeispiels eines erfindungsgemäßen Permanentmagneten, bei der man auf eine Endfläche sieht,
- FIG 6: einen Längsschnitt des Permanentmagneten der FIG 5 entlang der Linie VI-VI,
- FIG 7: einen Längsschnitt durch ein drittes Ausführungsbeispiel eines erfindungsgemäßen Rotors, der erfindungsgemäße Permanentmagnete gemäß der FIG 5 aufweist,
- FIG 8: eine Ansicht des dritten Ausführungsbeispiels gemäß der FIG 7, bei der man entlang einer Drehachse des Rotors auf ein erstes axiale Ende des Rotors sieht,
- FIG 9: einen Längsschnitt durch ein viertes Ausführungsbeispiel eines erfindungsgemäßen Rotors, der erfindungsgemäße Permanentmagnete gemäß der FIG 10 aufweist,
- FIG 10: einen Querschnitt des Rotors der FIG 9 entlang der Linie X-X,
- FIG 11: einen Längsschnitt durch ein fünftes Ausführungsbeispiel eines erfindungsgemäßen Rotors, der erfindungsgemäße Permanentmagnete gemäß einem fünften Ausführungsbeispiel aufweist,
- FIG 12: einen Querschnitt des Rotors der FIG 11 entlang der Linie XII-XII,
- FIG 13: Ausführungsbeispiele erfindungsgemäßer elektrischer Maschinen.

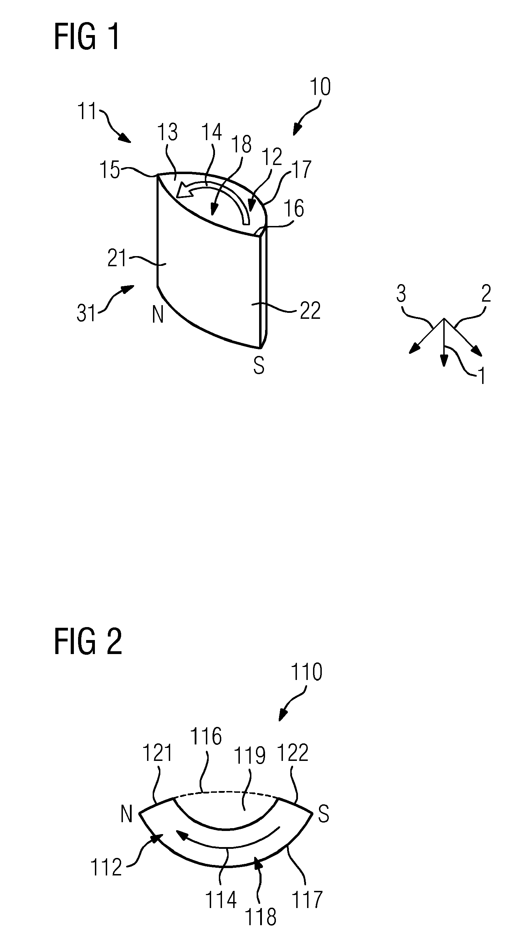

FIG 1 zeigt ein erstes Ausführungsbeispiel eines erfindungsgemäßen Permanentmagneten 10 der einen Nordpol 21 und einen Südpol 22 als magnetische Pole umfasst. Des Weiteren umfasst der Permanentmagnet 10 die Endflächen 12, 32 an einem ersten Ende 11 und an einem zweiten Ende 32. In einem Querschnitt 13 des Permanentmagneten 10 verläuft eine Magnetisierung 14 von dem Südpol 22 zu dem Nordpol 21, wobei der Querschnitt 13 eine Hüllkurve 15 mit einem ersten konvexen Abschnitt 16 aufweist und die magnetischen Pole bogenförmig entlang des ersten konvexen Abschnitts 16 verlaufen. Durch die laterale Magnetisierung 14 stellt der Permanentmagnet 10 den Nord- 21 und den Südpol 22 entlang des ersten konvexen Abschnitts 16 auf einer Seite des Permanentmagneten 10 zur Verfügung. In dem Ausführungsbeispiel gemäß der FIG 1 weist die Endfläche 12 an dem ersten Ende 11 den Querschnitt 13 des Permanentmagneten 10 auf. Der Permanentmagnet 10 erstreckt sich von seinem ersten Ende 11 in einer ersten Richtung 1 bis zu seinem zweiten Ende 31, wobei alle Querschnitte entlang der ersten Richtung 1 gleiche Hüllkurven 15 aufweisen. Die Hüllkurve 15 weist bikonvex linsenförmig den ersten konvexen Abschnitt 16 und einen zweiten konvexen Abschnitt 17 auf, wobei der Permanentmagnet 10 entlang des zweiten konvexen Abschnitts 17 bogenförmig verläuft. Mindestens eine der Endflächen 12 weist innerhalb der Hüllkurve 15 eine Fläche 18 für eine Verbindung 670 einer Verbindungsvorrichtung 672 mit dem Permanentmagneten 10 auf. Eine Höhe des Permanentmagneten 10 ist als größter Abstand zwischen dem ersten konvexen Abschnitt 16 und dem zweiten konvexen Abschnitt 17 gemessen. Der Querschnitt 13 des Permanentmagneten 10 erstreckt sich in einer Ebene, die durch eine zweite Richtung 2 und eine dritte Richtung 3 aufgespannt sind. Die zweite Richtung 2 und die dritte Richtung 3 verlaufen senkrecht zu der ersten Richtung 1. Die Endfläche 12 des ersten Endes 11 weist die Fläche 18 zumindest für die Verbindung 670 der Verbindungsvorrichtung 672 mit dem Permanentmagneten 10 durch Stoffschluss auf. In dem Ausführungsbeispiel gemäß der FIG 1 wird die Endfläche 12 an dem ersten Ende 11 durch die Fläche 18 gebildet, die eine Ebene ist. Der Permanentmagnet 10 verläuft zwischen dem Nordpol 21 und dem Südpol 22 entlang dem ersten konvexen Abschnitt 16. Der Permanentmagnet 10 ist ein gesinterter Permanentmagnet.

FIG 2 zeigt eine Ansicht eines zweiten Ausführungsbeispiels eines erfindungsgemäßen Permanentmagneten 110, bei der man auf eine Endfläche 112 sieht. Dieses Ausführungsbeispiel weist Merkmale auf, die anhand der FIG 1 beschrieben wurden. Die Merkmale sind in FIG 2 größtenteils mit Bezugszeichen versehen, die aus den Bezugszeichen der FIG 1 durch Voranstellen einer "1" entstanden ist. So ist z. B. die Beschreibung zu dem zweiten konvexen Abschnitt 17 der FIG 1 entsprechend auf einen zweiten konvexen Abschnitt 117 der FIG 2 zu übertragen. Auf die unterschiedlichen Merkmale des Permanentmagneten 110 gemäß FIG 2 gegenüber dem Permanentmagneten 10 gemäß FIG 1 wird nachfolgend eingegangen. Der Permanentmagnet 110 gemäß der FIG 2 weist zwischen dem Nordpol 121 und dem Südpol 122 an dem ersten konvexen Abschnitt 116 eine Ausnehmung 119 auf. Die Fläche 118 des Permanentmagneten 110 ist unbearbeitet. Der Permanentmagnet 110 wurde damit nach dessen Sintern an der Fläche 118, d. h. an der Endfläche 112 nicht mechanisch bearbeitet.

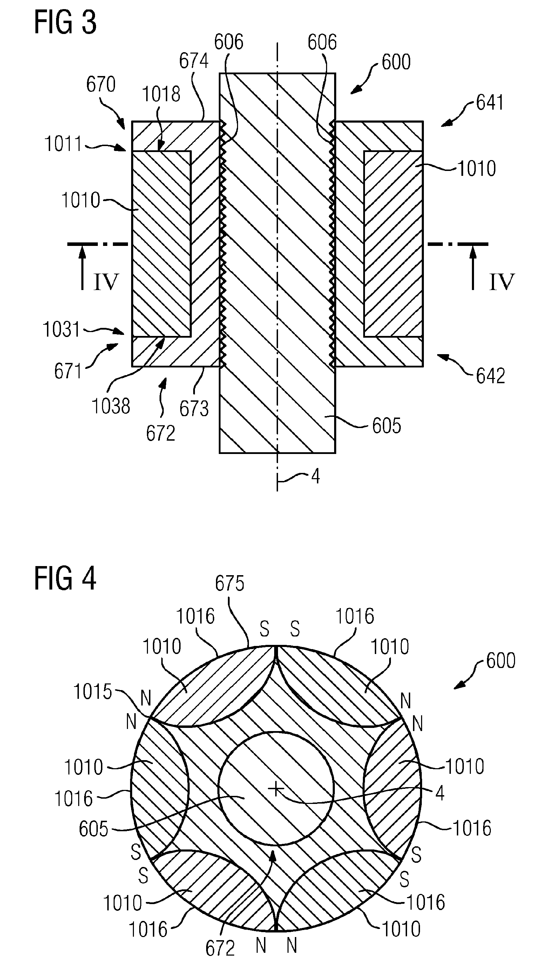

Die FIG 3 zeigt einen Längsschnitt durch ein erstes Ausführungsbeispiel eines erfindungsgemäßen Rotors 600, der einen Permanentmagneten 1010 umfasst, wobei der Permanentmagnet 1010 sich von seinem ersten Ende 1011 zu seinem zweiten Ende 1031 parallel zu einer Drehachse 4 erstreckt, wobei der Rotor 600 die Verbindungsvorrichtung 672 und die Verbindung 670 zwischen der Verbindungsvorrichtung 672 und der Fläche 1018 des Permanentmagneten 1010 aufweist. Der Permanentmagnet 1010 gemäß der FIG 3 weist die größtenteils mit Bezugszeichen versehenen Merkmale des Permanentmagneten 10 gemäß der FIG 1 auf, wobei den Bezugszeichen der FIG 1 eine "10" vorangestellt wurde. Der Permanentmagnet 1010 gemäß der FIG 3 weist an den Flächen 1018, 1038 eine Beschichtung auf. Die Verbindungsvorrichtung 672 weist einen Kunststoff auf, der die Verbindung mit dem Permanentmagneten 1010 durch Stoffschluss mit dessen Beschichtung ausbildet. Zur Ausbildung der Verbindungen 670, 671 der Verbindungsvorrichtung 672 mit den Flächen 1018, 1038 der Endflächen an dem ersten Ende 1011 und dem zweiten Ende 1031 des Permanentmagneten 1010 wird der Kunststoff der Verbindungsvorrichtung 673 erwärmt, so dass sich die Verbindungen 670, 671 durch Stoffschluss ausbilden. Der Rotor 600 weist die Verbindung 1018 an einem ersten axialen Ende 641 des Rotors 600 auf und der Rotor 600 weist die zweite Verbindung 671 der Verbindungsvorrichtung mit der Endfläche an dem zweiten Ende 1031 des Permanentmagneten 1010 auf.

Der Rotor 600 weist eine Welle 605 auf, die sich entlang der Drehachse 4 erstreckt. Die Welle 605 weist eine Rändelung 606 auf, die sich in einer Richtung parallel zu der Drehachse 4 abschnittsweise entlang der Verbindungsvorrichtung 672 erstreckt. Eine Befestigung der Permanentmagnete 1010 an der Welle 605 über die Verbindungsvorrichtung 672 wird durch Spritzgießen hergestellt. Hierbei wird die Welle 605 und die Permanentmagnete 1010 entsprechend positioniert und der Kunststoff für die Verbindungsvorrichtung 672 durch Spritzgießen zwischen den Permanentmagneten 1010 und der Welle 605 und an dem ersten und zweitem Ende 1011, 1031 der Permanentmagneten 1010 angebracht. Hierbei bilden sich die erste Verbindung 1018 und die zweite Verbindung 1038 an den Endflächen der Permanentmagnete 1010 durch Stoffschluss aus. Die Permanentmagnete 1010 sind dabei in der Verbindungsvorrichtung 772 eingebettet. Des Weiteren bildet sich zwischen der Welle 605 und der Verbindungsvorrichtung 672 eine stoffschlüssige Verbindung und durch die Rändelung 606 der Welle eine formschlüssige Verbindung auf. Die Endflächen an dem ersten und dem zweiten Ende 1011, 1031 weisen die Flächen 1018, 1038 für die Verbindungen 670, 671 der Verbindungsvorrichtung 672 mit dem Permanentmagneten 1010 innerhalb der Hüllkurve 1015 des Querschnitts der Permanentmagnete 1010 auf. Durch die Befestigung der Permanentmagnete 1010 an den Flächen 1018, 1038 kann vorteilhaft kostengünstig in einer hohen Qualität die Verbindungsvorrichtung 672 gleichzeitig als Anschläge 673, 674 für die Lager einer ersten und zweiten Lagervorrichtung 58 einer elektrischen Maschine 61 mit dem Rotor 600 dienen.

Die FIG 4 zeigt einen Querschnitt des Rotors 600 der FIG 3 entlang der Linie IV-IV. Der Rotor 600 umfasst einen Permanentmagneten 1010, wobei der erste konvexe Abschnitt 1016 des Permanentmagneten 1010 entlang einer Hüllkurve 675 des Rotors 600 angeordnet ist. Der Rotor 600 weist mindestens zwei Permanentmagnete 1016 auf, die sich von ihrem ersten 1011 zu ihrem zweiten Ende 1031 parallel zu der Drehachse 4 erstrecken, wobei die ersten konvexen Abschnitte 1016 der Permanentmagnete 1010 an der Hüllkurve 675 des Rotors 600 auf einer zu der Drehachse 4 konzentrisch verlaufenden Kreislinie angeordnet sind. In der FIG 4 ist die Kreislinie nicht von der Hüllkurve 675 des Rotors 600 unterscheidbar, da diese die Kreislinie zumindest aus Sicht der bildlichen Darstellung vollständig bedeckt und somit die Kreislinie in der FIG 4 identisch zu der Hüllkurve 675 des Rotors 600 ist. Ein Nordpol eines Permanentmagneten 1010 ist entlang der Hüllkurve 675 des Rotors 600 neben dem Nordpol des auf der Hüllkurve 675 des Rotors 600 nächst gelegenen Permanentmagneten 1010 vorhanden.

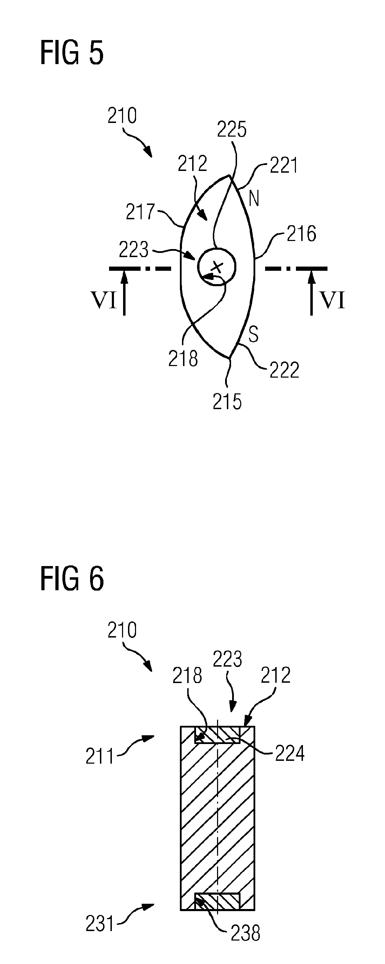

Die FIG 5 zeigt eine Ansicht eines dritten Ausführbeispiels eines erfindungsgemäßen Permanentmagneten 210, bei der man auf eine Endfläche 212 sieht. Dieses Ausführungsbeispiel weist Merkmale auf, die anhand der FIG 1 beschrieben wurden. Die Merkmale sind in FIG 5 größtenteils mit Bezugszeichen versehen, die aus den Bezugszeichen der FIG 1 durch Voranstellen einer "2" entstanden sind. Die Endfläche 212 des ersten Endes des Permanentmagneten 210 weist eine Kontur 223 auf, die die Fläche 218 für die Verbindung der Verbindungsvorrichtung 772 mit dem Permanentmagneten 210 durch Formschluss aufweist. Die Kontur 223 weist eine kreisrunde Berandung 225 auf, an der sich in einer Ausnehmung 224 die Fläche 218 erstreckt.

Die FIG 6 zeigt einen Längsschnitt des Permanentmagneten 210 der FIG 5 entlang der Linie VI-VI. Die Kontur 223 des Permanentmagneten 210 weist in der Endfläche 212 des ersten Endes 211 die Ausnehmung 224 auf. Der Permanentmagnet 202 weist analog dazu an den zweiten Ende 231 des Permanentmagneten 210 eine Kontur auf, die die Fläche 238 für die zweite Verbindung der Verbindungsvorrichtung 772 mit dem Permanentmagneten 210 durch Formschluss aufweist. Bei einem weiteren Ausführungsbeispiel eines erfindungsgemäßen Permanentmagneten, bei dem die Kontur einem gegenüber der Endfläche hervorstehenden Steg aufweist, befinden sich die Flächen für die formschlüssige Verbindung nicht in der Ausnehmung 224, sondern an dem hervorstehenden Steg.

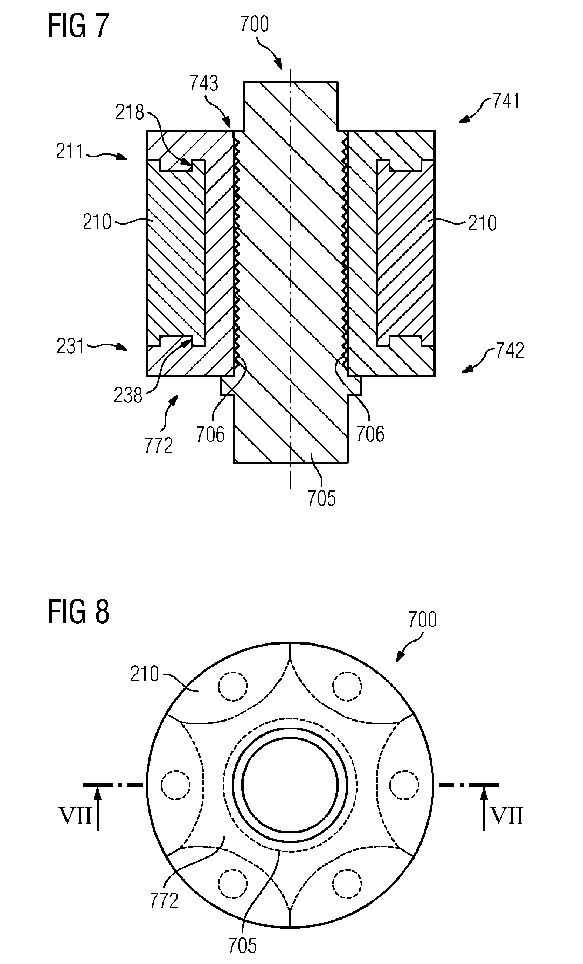

FIG 7 zeigt einen Längsschnitt durch ein drittes Ausführungsbeispiel eines erfindungsgemäßen Rotors 700 der erfindungsgemäße Permanentmagnete 210 gemäß der FIG 5 aufweist. Dieses Ausführungsbeispiel weist auch Merkmale auf, die anhand der FIG 3 und FIG 4 beschrieben wurden. Die Merkmale sind in der FIG 7 mit Bezugszeichen versehen, die aus den Bezugszeichen der FIG 3 und FIG 4 durch Ersetzen der ersten Ziffer "6" durch eine "7" entstanden sind. Der Rotor 700 weist die Verbindung durch Formschluss an dem ersten axialen Ende 741 des Rotors 700 auf und der Rotor weist eine zweite Verbindung durch Formschluss der Verbindungsvorrichtung 772 mit der Endfläche an dem zweiten Ende 231 des Permanentmagneten 210 auf. Bei dem Rotor 700 sind die Permanentmagnete 210 ebenfalls in der Verbindungsvorrichtung 772 eingebettet, indem die Verbindungsvorrichtung 772 durch Spritzgießen mit einem Spritzgusswerkzeug hergestellt wird, wobei die Permanentmagnete 210 mit ihrem ersten konvexen Abschnitt 216 an der Hüllkurve des Rotors 700 auf einer zu der Drehachse 4 konzentrisch verlaufenden Kreislinie angeordnet sind. Das heißt, dass bei dem Rotor 705 die Montage der Welle 705 separat erfolgt. Die Verbindungsvorrichtung 772 weist die Öffnung 743 für die Welle 705 auf. Nach dem Befestigen und Einbetten der Permanentmagnete 210 in die Verbindungsvorrichtung 772 kann die Welle 705 durch die Öffnung 743 gepresst werden, um die Verbindungsvorrichtung 772 kraftschlüssig an der Welle 705 zu befestigen. So werden dauerhaft Kräfte auf die Verbindungsvorrichtung 772 ausgeübt. Diese können vorteilhaft kostengünstig in einer hohen Qualität zusätzlich für die Verbindungen der Verbindungsvorrichtung 772 mit dem Permanentmagneten 210 durch Kraftschluss verwendet werden. So kann vorteilhaft kostengünstig in einer hohen Qualität die Endfläche des ersten Endes 211 die Fläche 218 auch für die Verbindung der Verbindungsvorrichtung 772 mit dem Permanentmagneten 210 durch Kraftschluss aufweisen.

FIG 8 zeigt eine Ansicht des dritten Ausführungsbeispiel gemäß der FIG 7, bei der man entlang der Drehachse 6 des Rotors 700 auf das erste axiale Ende des Rotors 700 sieht. In der FIG 8 sind strichliert die in dieser Ansicht nicht sichtbaren Merkmale der Permanentmagneten 210 der Verbindungsvorrichtung 772 und der Welle 705 eingezeichnet.

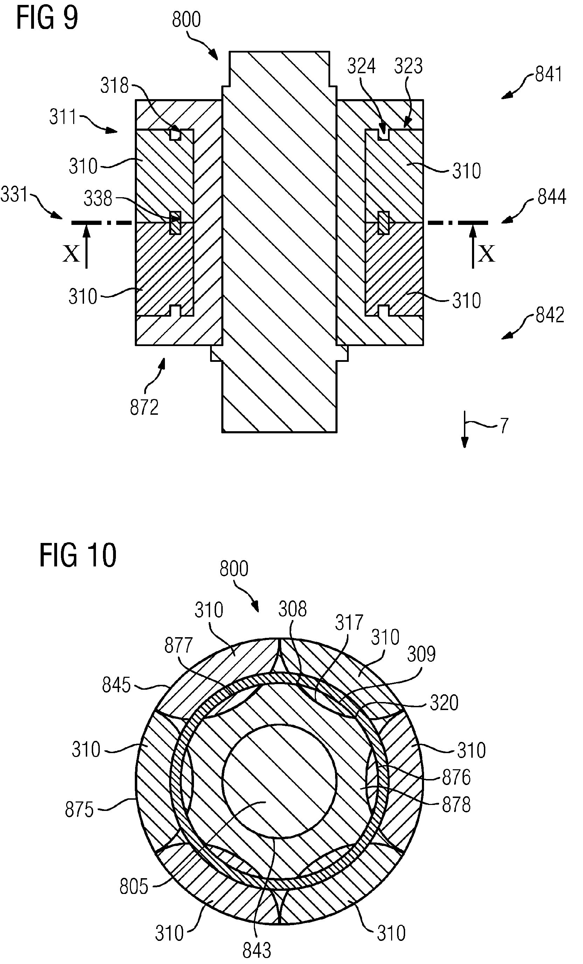

Die FIG 9 zeigt einen Längsschnitt durch ein viertes Ausführungsbeispiel eines erfindungsgemäßen Rotors 800, der erfindungsgemäße Permanentmagnete 310 gemäß der FIG 10 aufweist. Dieses Ausführungsbeispiel weist auch Merkmale auf, die anhand der FIG 7 und FIG 8 beschrieben wurden. Die Merkmale sind in der FIG 9 mit Bezugszeichen versehen, die aus den Bezugszeichen der FIG 7 und FIG 8 durch Ersetzen der ersten Ziffer "7" durch eine "8" entstanden sind. Der Rotor 800 weist die Verbindung an dem ersten axialen Ende 841 des Rotors 800 durch Formschluss auf und der Rotor 800 weist eine zweite Verbindung der Verbindungsvorrichtung 872 mit der Endfläche an dem zweiten Ende 331 des Permanentmagneten 310 auf. Der Rotor 800 weist die zweite Verbindung in einem Rotorabschnitt 844 zwischen dem ersten axialen Ende 841 und dem zweiten axialen Ende 842 des Rotors 800 auf und der Rotor 800 weist zwischen dem Rotorabschnitt 844 und dem zweiten axialen Ende 842 mindestens einen weiteren Permanentmagneten 310 auf. An dem Rotor 800 sind somit mehrere Permanentmagnete 310 in der axialen Richtung 7 hintereinander zwei Permanentmagnete 310 auf.

Die FIG 10 zeigt einen Querschnitt des Rotors 309 der FIG 9 entlang der Linie X-X. Die Verbindungsvorrichtung 872 erstreckt sich in einem Querschnitt 845 des Rotors 800 an den Permanentmagneten 310 angrenzend konzentrisch zur Hüllkurve 875 des Rotors 800 ringförmig. Die Verbindungsvorrichtung 872 weist hierfür einen Ring als Verbindungsteil 876 auf. Der Rotor 800 gemäß der FIG 10 weist erfindungsgemäße Permanentmagnete 310 gemäß einem vierten Ausführungsbeispiel eines erfindungsgemäßen Permanentmagneten 310. Das vierte Ausführungsbeispiel erfindungsgemäße Permanentmagnete weist auch Merkmale auf, die anhand der FIG 1 beschrieben wurden. Die Merkmale sind in der FIG 9 und der FIG 10 mit Bezugszeichen versehen, die aus den Bezugszeichen der FIG 1 durch Ersetzen der ersten Ziffer in "1" durch eine "3" entstanden sind. Die Kontur 323 weist eine Ausnehmung 324 in der Endfläche des ersten Endes 311 des Permanentmagneten 310 auf. Die Kontur 323 weist eine Nut auf, die durch die Ausnehmung 324 gebildet ist. Die Kontur 323 weist eine Berandung 309 auf, die sich bogenförmig von einem ersten Punkt 308 des zweiten konvexen Abschnitts 317 zu einem zweiten Punkt 320 des zweiten konvexen Abschnitts 317 erstreckt. Das Verbindungsteil 876, d. h. der Ring der Verbindungsvorrichtung 872, weist einen umlaufenden Rand 877 für eine formschlüssige Verbindung mit der Berandung 309 der Kontur 323 auf. Das Verbindungsteil 876 verläuft so in der Nut von zwei in der axialen Richtung 7 hintereinander angeordneten Permanentmagneten 310. Zwischen einem Permanentmagneten 310 und des ihm auf der Hüllkurve 875 des Rotors 800 nächstgelegenen Permanentmagneten 310 ist das Verbindungsteil 876 mit einem Gussteil 878 verbunden, welches die Verbindungsvorrichtung 872 aufweist. Damit die zulässigen Fliehkräfte in einem Betrieb des Rotors 800 durch die Festigkeit des Rings hohe Werte ohne Schädigung des Rotors 800 vorteilhaft annehmen kann, ist das Verbindungsteil 876 aus einem Stahl, einem Karbonfaser verstärkten Kunststoff oder einem Glasfaser verstärkten Kunststoff. Der Einsatz dieser Materialien ist vorteilhaft kostengünstig in einer hohen Qualität bei dem Rotor 800 möglich, da die Fliehkräfte das Material des Rings 876 auf Zug beanspruchen. Bei einer Herstellung des Rotors 800 können die Permanentmagnete 310 mit dem Verbindungsteil 876 vorteilhaft zumindest teilweise fixiert in einem Spritzgusswerkzeug positioniert werden und das Gussteil 878 durch Spritzgießen mit einem Spritzgussmaterial hergestellt werden. Das Spritzgussmaterial weist einen Kunststoff auf. Bei einem Ausführungsbeispiel des Rotors 800, bei dem das Verbindungsteil 876 aus einem Glasfaser verstärkten Material oder Karbonfaser verstärkten Material ist, kann vorteilhaft kostengünstig in einer hohen Qualität der Rotor 800 ohne Welle 805 hergestellt werden und durch das Einpressen der Welle 805 in die Öffnung 843 für die Welle das Verbindungsteil 876 vorgespannt werden, da das Glasfaser verstärkten Material oder Karbonfaser verstärkten Material vorteilhaft elastisch hierfür ist. So ist vorteilhaft kostengünstig in einer hohen Qualität auch eine kraftschlüssige Verbindung der Verbindungsvorrichtung 872 mit dem Permanentmagneten 310 vorhanden.

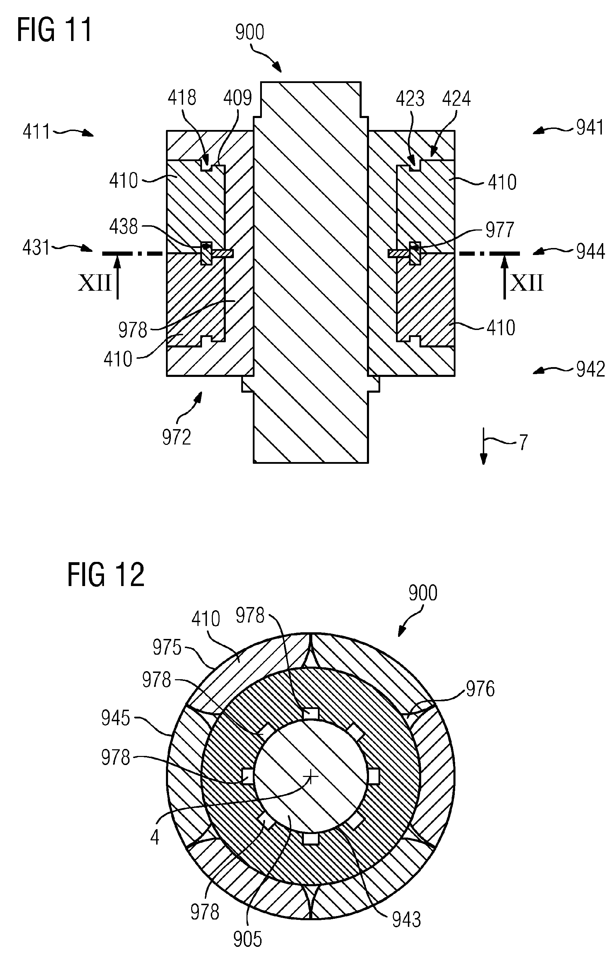

Die FIG 11 zeigt einen Längsschnitt durch ein fünftes Ausführungsbeispiel eines erfindungsgemäßen Rotors 900, der erfindungsgemäße Permanentmagnete 410 gemäß einem fünften Ausführungsbeispiel aufweist. Das fünfte Ausführungsbeispiel des Permanentmagneten 410 weist auch Merkmale auf, die anhand der FIG 1, der FIG 9 und FIG 10 beschrieben wurden. Die Merkmale sind in FIG 11 mit Bezugszeichen versehen bzw. können mit Bezugszeichen versehen werden, die aus den Bezugszeichen der FIG 1, FIG 9 und FIG 10 durch Ersetzen der ersten Ziffer "8" durch eine "9" entstanden sind bzw. durch Voranstellen einer "4". Der Permanentmagnet 410 weist wie bei dem fünften Ausführungsbeispiel eine Kontur 473 mit einer Nut auf, die eine Berandung 409 aufweist, die sich bogenförmig von dem ersten Punkt des zweiten konvexen Abschnitts zum zweiten Punkt des zweiten konvexen Abschnitts erstreckt. Zusätzlich erstreckt sich die Ausnehmung 424 mit einer im Vergleich zu der Nut geringeren Tiefe bis zum zweiten konvexen Abschnitt des Permanentmagneten 410.

Die FIG 12 zeigt einen Querschnitt des Rotors 900 der FIG 11 entlang der Linie XII-XII. Die Verbindungsvorrichtung 972 erstreckt sich in ihrem Querschnitt 945 des Rotors 900 an den Permanentmagneten 410 angrenzend konzentrisch zur Hüllkurve 975 des Rotors 900 ringförmig. Hierzu weist die Verbindungsvorrichtung in dem Querschnitt 945 des Rotors 900 ein Verbindungsteil 976 auf, das einen umlaufenden Rand 977 für eine formschlüssige Verbindung mit der Berandung 409 der Kontur 423 des Permanentmagneten 410 aufweist. Das Verbindungsteil 976 erstreckt sich bis zu der Öffnung 943 für die Welle 905. In dem Ausführungsbeispiel der FIG 11 und FIG 12 erstreckt sich das Verbindungsteil 976 von seinem umlaufenden Rand 977 bis zu der Öffnung 943 scheibenförmig. Das Verbindungsteil 976 ist entlang der Öffnung 943 für die Welle 905 durch aufeinanderfolgende Ausnehmungen 978 segmentiert. So kann vorteilhaft kostengünstig in einer hohen Qualität der Rotor 900 mit einer Presspassung auf der Welle 905 befestigt werden und zusätzlich eine Zentrierung der Permanentmagnete 410 zur Drehachse 4 vorteilhaft erreicht werden. Das Verbindungsteil 976 kann wie in dem vierten Ausführungsbeispiel eines erfindungsgemäßen Rotors 800 in dem Gussteil 978 eingespritzt sein.

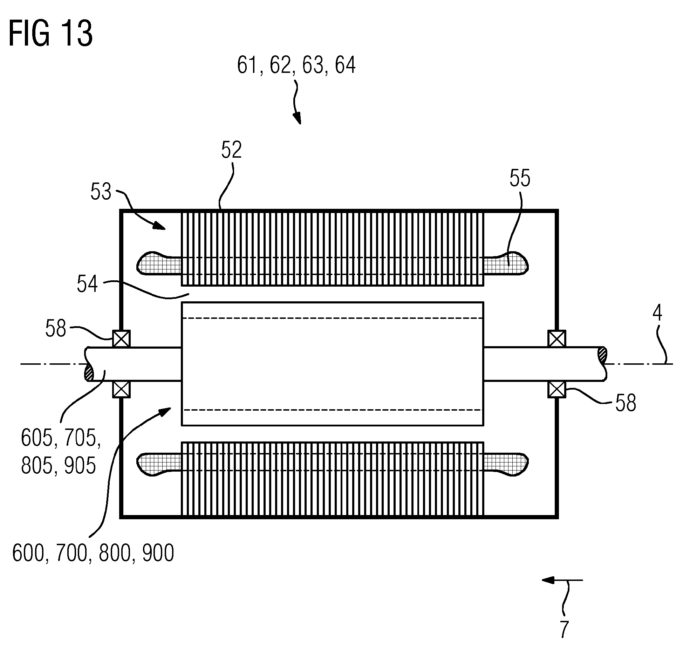

FIG 13 zeigt Ausführungsbeispiele erfindungsgemäßer elektrischer Maschinen 61, 62, 63, 64. Diese Ausführungsbeispiele weisen Merkmale auf, die anhand der FIG 1 bis 12 bereits beschrieben wurden. Diese sind in FIG 13 nicht mit Bezugszeichen versehen, könnten aber mit den Bezugszeichen wie in FIG 1 bis 12 versehen werden und mit der dazugehörigen Beschreibung beschrieben werden. Nachfolgend werden die elektrischen Maschinen und entsprechende Ausführungsbeispiele von erfindungsgemäßen Verwendungen der Permanentmagnete für einen Rotor einer elektrischen Maschine anhand einer elektrischen Maschine beschrieben, wobei die Bezugszeichen aller Ausführungsbeispiele angegeben werden. Es kann z.B. die Beschreibung des ersten Ausführungsbeispiels mit dem Bezugszeichen 61 auf die Bezugszeichen der Merkmale der elektrischen Maschine mit Bezugszeichen 61 beschränkt werden, indem die an zweiter bis vierter Stelle genannten Bezugszeichens eines Merkmals gestrichen werden. Entsprechend erhält man die Beschreibung für ein zweites Ausführungsbeispiel mit dem Bezugszeichen 62 durch Streichen der an erster Stelle und dritter und vierter Stelle genannten Bezugszeichen eines Merkmals. Die elektrischen Maschine 61, 62, 63, 64 umfasst einen Rotor 600, 700, 800, 900 und einen Stator 53, der in einem Betrieb der elektrischen Maschine 61, 62, 63, 64 über einen Luftspalt 54 mit dem Rotor 600, 700, 800, 900 magnetisch zusammenwirkt, wobei der Rotor 600, 700, 800, 900 um die Drehachse 4 drehbar gelagert ist. Der Rotor 600, 700, 800, 900 ist an der Welle 605, 705, 805, 905 befestigt und über diese mit einer ersten und einer zweiten Lagervorrichtung 58 um die Drehachse 4 drehbar in einem Gehäuse 52 der elektrischen Maschine 61, 62, 63, 64 gelagert. Der Stator 53 ist drehfest in dem Gehäuse 52 befestigt und weist mindestens eine Wicklung 55 auf, die sich in der axialen Richtung 7 der Drehachse 4 entlang des Luftspalts 54 erstreckt.

Bei Ausführungsbeispielen erfindungsgemäßer Verwendungen der Permanentmagnete 10, 110, 210, 310, 410, 1010 für den Rotor 600, 700, 800, 900 der elektrischen Maschine 61, 62, 63, 64 wird der der Permanentmagnete 10, 110, 210, 310, 410, 1010 bei dem Rotor 600, 700, 800, 900 verwendet. Dies wurde im Zusammenhang mit dem Permanentmagnet 10, 110, 210, 310, 410, 1010, dem Rotor 600, 700, 800, 900 und der elektrischen Maschine 61, 62, 63, 64 beschrieben.

Obwohl die Erfindung im Detail durch die bevorzugten Ausführungsbeispiele näher beschrieben wurde, ist sie nicht auf die offenbarten Beispiele beschränkt. Andere Variationen können vom Fachmann hieraus abgeleitet werden, ohne den Schutzumfang der Erfindung zu verlassen.

## Patentansprüche

1. Permanentmagnet (10, 110, 210, 310, 410, 1010) umfassend
- einen Nord- (21, 121) und einen Südpol (22, 122) als magnetische Pole und
- Endflächen (12, 112, 212) an einem ersten Ende (11, 1011, 211, 311, 411) und einem zweiten Ende (31, 1031, 231, 331, 431) des Permanentmagneten (10, 110, 210, 310, 410, 1010),
- wobei in einem Querschnitt (13) des Permanentmagneten (10, 110, 210, 310, 410, 1010) eine Magnetisierung (14, 114) von dem Südpol (22, 122) zu dem Nordpol (21, 121) verläuft,
- wobei der Querschnitt (13) eine Hüllkurve (15, 1015, 215) mit einem ersten konvexen Abschnitt (16, 116, 1016, 216) aufweist,
- wobei die magnetischen Pole bogenförmig entlang des ersten konvexen Abschnitts (16, 116, 1016, 216) verlaufen,
**dadurch gekennzeichnet, dass** die Hüllkurve (15, 1015, 215) bikonvex linsenförmig den ersten konvexen Abschnitt (16, 116, 1016, 216) und einen zweiten konvexen Abschnitt (17, 117, 217, 317) aufweist,
- wobei der Permanentmagnet (10, 110, 210, 310, 410, 1010) entlang des zweiten konvexen Abschnitts (17, 117, 217, 317) bogenförmig verläuft,
- wobei mindestens eine der Endflächen (12, 112, 212) innerhalb der Hüllkurve (15, 1015, 215) eine Fläche (18, 118, 218, 318, 418, 1038, 238, 338, 438) für eine Verbindung (670, 671) einer Verbindungsvorrichtung (672, 772, 872, 972) mit dem Permanentmagneten (10, 110, 210, 310, 410, 1010) aufweist.

2. Permanentmagnet (10, 110, 1010) nach Anspruch 1, wobei die Endfläche (12, 112) des ersten Endes (11, 1011) die Fläche (18, 118, 1018, 1038) zumindest für die Verbindung (670) der Verbindungsvorrichtung (672) mit dem Permanentmagneten (10, 110, 1010) durch Stoffschluss aufweist.

3. Permanentmagnet (210, 310, 410) nach Anspruch 1 oder 2, wobei die Endfläche des ersten Endes (211, 311, 411) eine Kontur (223, 323, 423) aufweist, die die Fläche (218, 318, 418) für die Verbindung der Verbindungsvorrichtung (772, 872, 972) mit dem Permanentmagneten (210, 310, 410) durch Formschluss aufweist.

4. Permanentmagnet (210, 310, 410) nach Anspruch 3, wobei die Kontur (223, 323, 423) eine Ausnehmung (224, 324, 424) in der Endfläche des ersten Endes (211, 311, 411) aufweist.

5. Permanentmagnet nach Anspruch 3, wobei die Kontur einen gegenüber der Endfläche hervorstehenden Steg aufweist.

6. Permanentmagnet (210) nach einem der Ansprüche 3 bis 5, wobei die Kontur (223) eine kreisrunde Berandung (225) aufweist.

7. Permanentmagnet (310, 410) nach einem der Ansprüche 3 bis 5, wobei die Kontur (323, 324) eine Berandung (309, 409) aufweist, die sich von einem ersten Punkt (308) des zweiten konvexen Abschnitts (317) zu einem zweiten Punkt (320) des zweiten konvexen Abschnitts (317) bogenförmig erstreckt.

8. Permanentmagnet (110) nach einem der vorhergehenden Ansprüche, wobei der Permanentmagnet (110) zwischen dem Nord-(121) und dem Südpol (122) an dem ersten konvexen Abschnitt (116) eine Ausnehmung (119) aufweist.

9. Permanentmagnet (10, 1010, 210, 310, 410) nach einem der Ansprüche 1 bis 7, wobei der Permanentmagnet (10, 1010, 210, 310, 410) zwischen dem Nordpol (21) und dem Südpol (22) entlang dem ersten konvexen Abschnitt (16) verläuft.

10. Permanentmagnet (10, 110, 210, 310, 410, 1010) nach einem der vorhergehenden Ansprüche, wobei der Permanentmagnet (10, 110, 210, 310, 410, 1010) ein gesinterter Permanentmagnet ist.

11. Rotor (600, 700, 800, 900) für eine elektrische Maschine (61, 62, 63, 64) umfassend einen Permanentmagnet (10, 110, 210, 310, 410, 1010) nach einem der vorhergehenden Ansprüche, wobei der Permanentmagnet (10, 110, 210, 310, 410, 1010) sich von seinem ersten Ende (11, 1011, 211, 311, 411) zu seinem zweiten Ende (31, 1031, 231, 338, 438) parallel zu einer Drehachse (4) erstreckt, wobei der erste konvexe Abschnitt (16, 116, 1016, 216) des Permanentmagneten (10, 110, 210, 310, 410, 1010) entlang einer Hüllkurve (675, 875) des Rotors (600, 700, 800, 900) angeordnet ist, wobei der Rotor (600, 700, 800, 900) die Verbindungsvorrichtung (672, 772, 872, 972) und die Verbindung (670, 671) zwischen der Verbindungsvorrichtung (672, 772, 872, 972) und der Fläche (18, 118, 218, 318, 418) des Permanentmagneten (10, 110, 210, 310, 410, 1010) aufweist.

12. Rotor (600, 700, 800, 900) nach Anspruch 11, wobei der Rotor (600, 700, 800, 900) die Verbindung an einem ersten axialen Ende (641, 741, 841, 941) des Rotors (600, 700, 800, 900) aufweist und der Rotor (600, 700, 800, 900) eine zweite Verbindung der Verbindungsvorrichtung (672, 772, 872, 972) mit der Endfläche an dem zweiten Ende (1031, 231, 331, 431) des Permanentmagneten (10, 110, 210, 310, 410, 1010) aufweist.

13. Rotor (800, 900) nach Anspruch 11 oder 12, wobei sich die Verbindungsvorrichtung (872, 972) in einem Querschnitt (845, 945) des Rotors (800, 900) an den Permanentmagneten (310, 410) angrenzend konzentrisch zur Hüllkurve (875, 975) des Rotors (800, 900) ringförmig erstreckt.

14. Elektrische Maschine (61, 62, 63, 64), umfassend einen Rotor (600, 700, 800, 900) nach Anspruch 11, und
- einen Stator (53), der in einem Betrieb der elektrischen Maschine (61, 62, 63, 64) über einen Luftspalt (54) mit dem Rotor (600, 700, 800, 900) magnetisch zusammenwirkt,
- wobei der Rotor (600, 700, 800, 900) um die Drehachse (4) drehbar gelagert ist.

15. Verwendung eines Permanentmagneten (10, 110, 1010, 210, 310, 410) nach einem der Ansprüche 1 bis 10 für einen Rotor (600, 700, 800, 900) einer elektrischen Maschine (61, 62, 63, 64), wobei der Permanentmagnet (10, 110, 1010, 210, 310, 410) bei dem Rotor (600, 700, 800, 900) verwendet wird, der die Verbindungsvorrichtung (672, 772, 872, 972) aufweist, wobei der Rotor (600, 700, 800, 900) die Verbindung (670, 671) zwischen der Verbindungsvorrichtung (672, 772, 872, 972) und der Fläche (18, 118, 1018, 218, 318, 418) des Permanentmagneten (10, 110, 1010, 210, 310, 410) aufweist, wobei mindestens eine der Endflächen (12, 112, 212) des Permanentmagneten (10, 110, 1010, 210, 310, 410) die Fläche innerhalb der Hüllkurve (15, 1015, 215) aufweist und der Querschnitt (13) des Permanentmagneten (10, 110, 1010, 210, 310, 410) die bikonvexe linsenförmige Hüllkurve (15, 1015, 215) aufweist.
